# EUROPÄISCHE PATENTSCHRIFT

(11) **EP 2 876 396 B1**
(45) Veröffentlichungstag und Bekanntmachung des Hinweises auf die Patenterteilung: **02.01.2019**
(21) Anmeldenummer: 14194493.4
(22) Anmeldetag: 24.11.2014
(51) Int. Cl.: F26B 3/06, F26B 9/06, F26B 21/04, F26B 21/08, F26B 21/10, F26B 21/12, F26B 23/00

(54) **Verfahren zum Trocknen von Trocknungsgut**
Method for drying material to be dried
Procédé de séchage de matières à sécher

(30) Priorität: 22.11.2013 AT 3932013 U
(43) Veröffentlichungstag der Anmeldung: 27.05.2015
(73) Patentinhaber: Heutrocknung SR GmbH, 5204 Straßwalchen (AT)
(72) Erfinder: Reindl, Josef, 5204 Straßwalchen (AT)
(74) Vertreter: KLIMENT & HENHAPEL

(56) Entgegenhaltungen:
- EP-A1- 0 055 787
- JP-A- 2005 027 934
- US-A- 4 231 166
- US-A1- 2012 186 305
- Gotthard Wirleitner ET AL: "Qualitätsheu durch energieeffi ziente Technik", Viehwirtschaftliche Fachtagung, 13. April 2010 (2010-04-13), Seiten 71-80, XP055180191, Gefunden im Internet: URL:http://www.naturland.de/fileadmin/MDB/ documents/Erzeuger/Tagungsbeitraege/Milchv iehhaltertagung_2011/2011_03_02_Wirtleitne r_Vortrag_Gumpenstein_4.10_Wirleitner_Tech niken.pdf [gefunden am 2015-03-30]
- Anonymous: "Heu mit möglichst wenig Energieaufwand trocknen | BauernZeitung/Technik", , 21. April 2011 (2011-04-21), XP055179098, Gefunden im Internet: URL:http://www.bauernzeitung.at/?+Heu+mit+ moeglichst+wenig+Energieaufwand+trocknen+& id=2500%2C111750%2C%2C%2Cc1F1PSUyMCZjdD00M iZtb2RlPW5leHQmcGFnaW5nPXllc19fNDAmcmVpdGV yPTE0MCZiYWNrPTE%3D [gefunden am 2015-03-25]
- Franz Nydegger ET AL: "Qualitätsheu durch effektive und kostengünstige Belüftung", , 22. April 2013 (2013-04-22), XP055180200, Gefunden im Internet: URL:http://www.heutrocknung.at/qualitaetsh eu.pdf [gefunden am 2015-03-30]

## Beschreibung

### GEBIET DER ERFINDUNG

Die vorliegende Erfindung betrifft ein Verfahren zum Trocknen von Heu, wobei das Heu in eine Belüftungsbox mit einer anströmbaren Boxenfläche aufgegeben wird, wobei mittels mindestens eines steuerbaren Ventilators Luft angesaugt und zumindest teilweise einem steuerbaren Luftentfeuchter zugeführt wird, in welchem die Luft entfeuchtet wird, und wobei die zumindest teilweise entfeuchtete Luft mittels des mindestens einen Ventilators in die Belüftungsbox auf die anströmbare Boxenfläche eingeblasen wird und wobei die Luft, nachdem sie durch einen Verdampfer des Luftentfeuchters geführt worden ist, angewärmt wird mittels eines Kondensators des Luftentfeuchters und/oder mittels eines Kompressors des Luftentfeuchters.

### STAND DER TECHNIK

Bei der Trocknung von Heu, das in der Landwirtschaft als ideales Futter für Rinder eingesetzt werden kann, ist es bekannt, Luft zu entfeuchten und durch das Trocknungsgut zu blasen. Hierfür wird das Trocknungsgut in einer Belüftungsbox platziert. Die Luft wird über einen Ventilator angesaugt, einem Luftentfeuchter zugeführt und anschließend in die Belüftungsbox eingeblasen.

Um die Trocknung sinnvoll durchführen zu können, darf die Luft nicht zu kalt sein und muss ggf. angewärmt werden. Zudem kann die Luft auch gezielt angeheizt werden, um die Trocknungsleistung weiter zu erhöhen. Gleichzeitig ist es für die Trocknung wichtig, dass eine hinreichend große Menge an entfeuchteter Luft in die Belüftungsbox bzw. durch das Heu geblasen wird. Dies kann einen sehr hohen Energieverbrauch zur Folge haben. Zudem können sehr hohe Energieverbrauchsspitzen auftreten, in Abhängigkeit davon, wie kalt die verwendete Luft ist bzw. wie stark die Luft angewärmt werden muss, um sie zum Trocknen verwenden zu können. Entsprechend großzügig müssen die Energieversorgungseinrichtungen, z.B. elektrische Anlagen, dimensioniert werden, was wiederum erhebliche Kosten verursacht.

Aus G. Wirleitner et al., "Qualitätsheu durch energieeffiziente Technik", 37. Viehwirtschaftliche Fachtagung 2010, 71-80 sowie aus F. Nydegger et al., "Qualitätsheu durch effektive und kostengünstige Belüftung", www.heutrocknung.at/qualitaetsheu.pdf ist ein Verfahren zur Heutrocknung mit einer Vorrichtung bekannt, welche Vorrichtung eine Dachabsaugung sowie eine Umschaltklappe umfasst, um zwischen Frischluft- und Umluftbetrieb hin und her schalten zu können. Weiters weist die Vorrichtung einen Luftentfeuchter mit einem Verdampfer und einem nachgeschalteten Kondensator auf, wobei der Luft im Verdampfer Wärme entzogen und im Kondensator die vorher entzogene Wärme samt der Abwärme des Antriebsaggregats und der Kondensationswärme zugeführt wird.

### AUFGABE DER ERFINDUNG

Es ist daher Aufgabe der vorliegenden Erfindung ein Verfahren zur Trocknung von Heu zur Verfügung zu stellen, das einen optimierten Energieverbrauch aufweist, der einerseits grundsätzlich niedrig ist und andererseits möglichst keine Spitzen aufweist.

### DARSTELLUNG DER ERFINDUNG

Die Erfindung ist ein Verfahren nach Anspruch 1. Der Erfindung liegt die Idee zugrunde, dass zur Vermeidung von Energieverbrauchsspitzen ein Gesamtleistungswert festgelegt wird, der der Summe aus einer mittleren Leistungsaufnahme eines steuerbaren Ventilators und eines steuerbaren Luftentfeuchters entspricht. Vorzugsweise erfolgt die Steuerung des Ventilators und des Luftentfeuchters mit Frequenzumrichtern. Hierbei wird die Leistungsaufnahme des Ventilators durch Regelung seiner Drehzahl eingestellt; die Leistungsaufnahme des Luftentfeuchters wird im Wesentlichen durch die Leistung eines Kompressors des Luftentfeuchters bestimmt.

In der Folge werden der Ventilator und der Luftentfeuchter so geregelt, dass die Summe aus deren Leistungen stets kleiner gleich dem Gesamtleistungswert ist, wobei eine Innentemperatur der Luft in der Belüftungsbox berücksichtigt wird. Somit ist es möglich, die Energieversorgung auf den Gesamtleistungswert bezogen zu dimensionieren und nicht größer auslegen zu müssen.

Daher ist es bei einem Verfahren zum Trocknen von Trocknungsgut, vorzugsweise Heu, wobei das Trocknungsgut in eine Belüftungsbox mit einer anströmbaren Boxenfläche aufgegeben wird, wobei mittels mindestens eines steuerbaren Ventilators Luft angesaugt und zumindest teilweise einem steuerbaren Luftentfeuchter zugeführt wird und wobei die zumindest teilweise entfeuchtete Luft mittels des mindestens einen Ventilators in die Belüftungsbox auf die anströmbare Boxenfläche eingeblasen wird und wobei die Luft, nachdem sie durch einen Verdampfer des Luftentfeuchters geführt worden ist, angewärmt wird mittels eines Kondensators des Luftentfeuchters und/oder mittels eines Kompressors des Luftentfeuchters, erfindungsgemäß vorgesehen, dass das Verfahren zumindest in einer Anfangsphase die folgenden Schritte umfasst:
- Reduzierung der angesaugten Luftmenge auf einen Minimalwert durch Regelung der Leistung des mindestens einen Ventilators auf einen Minimalleistungswert;
- Regelung der Leistung des Luftentfeuchters auf einen Maximalleistungswert, wobei die Summe aus Minimalleistungswert und Maximalleistungswert kleiner gleich einem festgelegten Gesamtleistungswert ist;
- Regelung der Leistung des Luftentfeuchters auf einen Wert kleiner als der Maximalleistungswert und Regelung der Leistung des mindestens einen Ventilators auf einen Wert größer als der Minimalleistungswert, um die angesaugte Luftmenge auf einen Sollwert zu erhöhen, sobald eine Innentemperatur der in der Belüftungsbox befindlichen Luft einen vorgegebenen Wert übersteigt, wobei die Summe aus den Leistungen des Luftentfeuchters und des mindestens einen Ventilators kleiner gleich dem Gesamtleistungswert ist.

Dabei wird ständig die Stromaufnahme des Ventilators und des Luftentfeuchters gemessen, und es wird fortlaufend die angesaugte Luftmenge (in m³) pro Zeiteinheit (h) und pro Quadratmeter Boxenfläche (m_{B}²) bestimmt. Weiters wird die Innentemperatur vorzugsweise in einem Endbereich der Belüftungsbox gemessen, wobei das Trocknungsgut bzw. Heu zwischen einem Anfangsbereich der Belüftungsbox und dem Endbereich, auf der anströmbaren Boxenfläche angeordnet ist.

In aufwendigen Versuchen konnte ein insbesondere für die Trocknung von Heu optimaler Bereich für den Minimalwert der angesaugten Luftmenge ermittelt werden. Daher ist es bei einer bevorzugten Ausführungsform des erfindungsgemäßen Verfahrens vorgesehen, dass der Minimalwert der angesaugten Luftmenge zwischen 200 m³/h/m_{B}² und 300 m³/h/m_{B}², vorzugsweise bei 250 m³/h/m_{B}² liegt.

Für ein optimales Trocknungsergebnis bzw. für ein rasches Trocknen ist eine geeignete Wahl des Sollwerts der angesaugten Luftmenge wichtig. Daher ist es bei einer bevorzugten Ausführungsform des erfindungsgemäßen Verfahrens vorgesehen, dass der Sollwert der angesaugten Luftmenge zwischen 350 m³/h/m_{B}² und 600 m³/h/m_{B}², vorzugsweise bei 400 m³/h/m_{B}² liegt.

Bevorzugt liegt das Heu im Wesentlichen lose in der Belüftungsbox vor, d.h. insbesondere nicht in Form von Rundballen. Selbstverständlich ist aber auch die Trocknung des Heus in Rundballenform möglich. In diesem Fall wird die anströmbare Boxenfläche auf jene Fläche beschränkt, auf der der bzw. die Rundballen aufliegt bzw. aufliegen. Dies kann bevorzugt so realisiert werden, dass jeweils ein zu trocknender Rundballen über jeweils einer Öffnung in einem Anfangsbereich der Belüftungsbox angeordnet wird, wobei die für das Trocknen verwendete Luft durch die Öffnung in die Belüftungsbox bzw. direkt auf den jeweiligen Rundballen eingeblasen wird. Die Öffnung kann als kreisrundes Loch ausgeführt sein und ist auf den Durchmesser der Rundballen angepasst, d.h. der Durchmesser der Öffnung entspricht im Wesentlichen dem Durchmesser des Rundballens und beträgt daher z.B. zwischen 1,2 m und 2 m. Damit der Rundballen nicht in die Öffnung hinein fällt, kann die Öffnung beispielsweise mit einem Gitter abgedeckt sein. Entsprechend ergeben sich in diesem Fall Sollwerte der angesaugten Luftmenge von z.B. ca. 850 m³/h bis 2000 m³/h pro Öffnung bzw. pro Rundballen.

Schließlich konnte in aufwendigen Versuchen ein insbesondere für die Trocknung von Heu optimaler Bereich für den vorgegebenen Wert für die Innentemperatur ermittelt werden. Daher ist es bei einer bevorzugten Ausführungsform des erfindungsgemäßen Verfahrens vorgesehen, dass der vorgegebene Wert für die Innentemperatur 20°C bis 28°C, vorzugsweise 20°C bis 25°C beträgt.

Wie bereits festgehalten, umfasst der Luftentfeuchter einen Kompressor. Weiters umfasst der Luftentfeuchter einen Verdampfer und einen Kondensator. Im Verdampfer wird Kältemittel durch die Wärme der angesaugten und durch den Verdampfer strömenden Luft verdampft. Hierdurch wird die angesaugte Luft unter den Taupunkt abgekühlt, und es kommt zu einer Kondensation von Wasser auf der kalten Oberfläche des Verdampfers, wobei das Wasser in der Folge vom Verdampfer abrinnt bzw. abtropft. Entsprechend ist die Luft in einer Durchströmungsrichtung gesehen hinter dem Verdampfer entfeuchtet. Mittels des Kompressors wird das gasförmige Kältemittel verdichtet und dem Kondensator zugeführt, wo das heiße gasförmige Kältemittel kondensiert. Bei der Kondensation gibt das Kältemittel latente Wärme ab, sodass der Kondensator zum Anwärmen der entfeuchteten Luft verwendet werden kann. Darüberhinaus gibt natürlich auch der Kompressor Wärme ab, die ebenfalls zum Anwärmen der entfeuchteten Luft verwendet werden kann. D.h. ein Anwärmen der entfeuchteten Luft ist grundsätzlich ohne zusätzliche Wärmequellen, wie z.B. eine elektrische Heizung, möglich.

Daher ist es vorgesehen, dass die Luft, nachdem sie durch einen Verdampfer des Luftentfeuchters geführt worden ist, angewärmt wird mittels eines Kondensators des Luftentfeuchters und/oder mittels eines Kompressors des Luftentfeuchters.

Neben dem Anwärmen der Luft ist es für die Erreichung des vorgegebenen Werts der Innentemperatur wichtig, dass keine kalte Luft von außerhalb der Belüftungsbox angesaugt wird. Umgekehrt ist es jedoch für die Erreichung des vorgegebenen Werts der Innentemperatur günstig, Luft von außerhalb der Belüftungsbox anzusaugen, wenn diese Luft eine Außentemperatur aufweist, die entsprechend groß, vorzugsweise größer als die Innentemperatur ist. Auf diese Weise kann die Leistung des Luftentfeuchters weiter reduziert werden, da die Luft weniger stark im Luftentfeuchter angewärmt werden muss, um den vorgegebenen Wert der Innentemperatur zu erreichen.

Daher ist es bei einer bevorzugten Ausführungsform des erfindungsgemäßen Verfahrens vorgesehen, dass in einem ersten Modus die Luft lediglich aus der Belüftungsbox angesaugt wird, dass in einem zweiten Modus die Luft zumindest teilweise von außerhalb der Belüftungsbox angesaugt wird und dass ein Hin- und Herschalten zwischen dem ersten Modus und dem zweiten Modus in Abhängigkeit von der Innentemperatur und/oder einer Außentemperatur der von außerhalb der Belüftungsbox angesaugten Luft und/oder der Differenz zwischen der Innentemperatur und der Außentemperatur erfolgt.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Darstellung einer Vorrichtung zum Trocknen von Heu gemäß dem erfindungsgemäßen Verfahren
- Fig. 2: eine schematische Ansicht eines Luftentfeuchters der Vorrichtung aus Fig. 1

### WEGE ZUR AUSFÜHRUNG DER ERFINDUNG

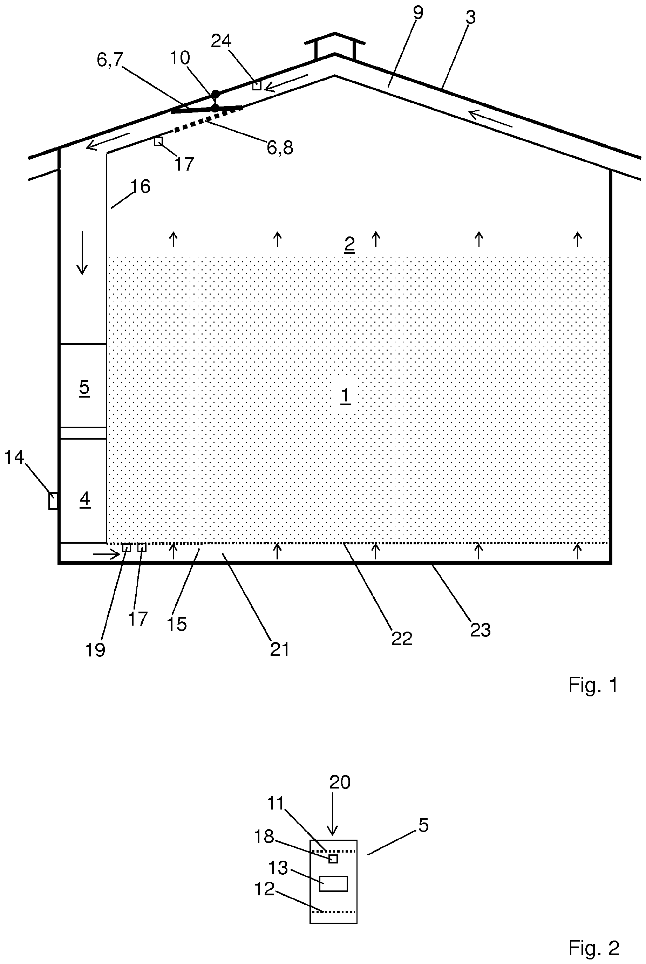

In Fig. 1 ist schematisch eine Vorrichtung zum Trocknen von Heu 1 dargestellt, wobei ein erfindungsgemäßes Verfahren eingesetzt werden kann. Das Heu 1 ist in einer Belüftungsbox 2 zwischen einem Anfangsbereich 15 und einem Endbereich 16 angeordnet. Die Belüftungsbox 2 ist mit einem Dach 3 überdacht, sodass das Heu 1 vor Witterungseinflüssen geschützt ist.

Das Heu 1 liegt auf einer Boxenfläche 22 auf. Die Boxenfläche 22 ist mit Luft anströmbar, indem die Boxenfläche 22 beispielsweise durch ein Baustahlgitter realisiert wird, das auf Rostträgern (nicht dargestellt) aufliegt und in einem gewissen Abstand, beispielsweise 40 cm, über einem Boden 23 angeordnet ist. Hierdurch wird im Anfangsbereich 15 ein Luftkanal 21 ausgebildet, durch den Luft auf die Boxenfläche 22 bzw. in die Belüftungsbox 2 einblasbar ist.

Um die Luft in bzw. durch die Belüftungsbox 2 zu blasen, weist die in Fig. 1 gezeigte Vorrichtung zur Heutrocknung einen Ventilator 4 auf, wobei die Pfeile in Fig. 1 mögliche Luftströme symbolisieren. Die in die Belüftungsbox 2 einzublasende Luft wird zunächst mittels des Ventilators 4 angesaugt, wobei vorzugsweise die gesamte angesaugte Luft durch einen Luftentfeuchter 5 gesaugt wird, in welchem Luftentfeuchter 5 die Luft entfeuchtet wird.

Der Luftdurchsatz kann durch eine Steuerung des Ventilators 4 beeinflusst werden, d.h. die Menge an angesaugter Luft und damit die Menge an in die Belüftungsbox 2 eingeblasener Luft kann reguliert werden. Hierbei ist außerdem zu berücksichtigen, dass die Dichte des Heus 1 variieren kann - typischerweise zwischen 100 kg/m³ bis 250 kg/m³ -, womit ein unterschiedlicher Widerstand für die in die Belüftungsbox 2 eingeblasene Luft einhergeht. Entsprechend muss die Leistung bzw. die Drehzahl des Ventilators 4 steuerbar sein, wobei hierfür Frequenzumrichter vorgesehen sind (nicht dargestellt).

Zur Überwachung des Drucks der Luft, die in die Belüftungsbox 2 eingeblasen wird, ist im Anfangsbereich 15 ein Drucksensor 19 angeordnet. Wird der Druck im Anfangsbereich 15 bzw. ein sich ergebender Differenzdruck zwischen Anfangsbereich 15 und Endbereich 16 zu groß, kann der Ventilator 4 entsprechend zurückgeregelt werden. Dies kann dann notwendig sein, wenn die Dichte des Heus 1 zu hoch ist und den Luftdurchsatz zu stark beeinträchtigt.

Vorzugsweise werden Frequenzumrichter außerdem auch zur Steuerung der Leistung des Luftentfeuchters 5 bzw. eines Kompressors 13 des Luftentfeuchters 5 eingesetzt, wobei der Kompressor 13 in Fig. 2, die ein vereinfachtes Schema des Aufbaus des Luftentfeuchters 5 zeigt, erkennbar ist. Wie aus Fig. 2 ebenfalls hervorgeht, umfasst der Luftentfeuchter 5 weiters einen Verdampfer 11 und einen Kondensator 12. Im Verdampfer wird Kältemittel durch die Wärme der angesaugten und durch den Verdampfer 11 strömenden Luft verdampft. Hierdurch wird die angesaugte Luft unter den Taupunkt abgekühlt, und es kommt zu einer Kondensation von Wasser auf der kalten Oberfläche des Verdampfers 11, wobei das Wasser in der Folge vom Verdampfer 11 abrinnt bzw. abtropft. Entsprechend ist die Luft in einer Durchströmungsrichtung 20 gesehen hinter dem Verdampfer 11 entfeuchtet. Mittels des Kompressors 13 wird das gasförmige Kältemittel verdichtet und dem Kondensator 12 zugeführt, wo das heiße gasförmige Kältemittel kondensiert. Bei der Kondensation gibt das Kältemittel latente Wärme ab, sodass der Kondensator 12 zum Anwärmen der entfeuchteten Luft verwendet werden kann. Darüberhinaus gibt natürlich auch der Kompressor 13 Wärme ab, die ebenfalls zum Anwärmen der entfeuchteten Luft verwendet werden kann. D.h. ein Anwärmen der entfeuchteten Luft ist zwar grundsätzlich mit zusätzlichen Wärmequellen, wie z.B. mit einer zusätzlichen elektrischen Heizung möglich, aber nicht notwendig, wenn die ohnehin vorhandenen Wärmequellen, d.h. Kondensator 12 und/oder Kompressor 13, richtig genutzt werden. Um den Kondensator 12 und den Kompressor 13 für das Anwärmen der entfeuchteten Luft optimal nutzen zu können, ist der Kondensator 12 in der Durchströmungsrichtung 20 gesehen hinter dem Verdampfer 11 angeordnet und der Kompressor 13 zwischen Verdampfer 11 und Kondensator 12.

Die Vorrichtung der Fig. 1 weist außerdem eine Umschaltklappe 6 auf, die im Endbereich 16 angeordnet ist und mittels eines elektrischen Zylinders 10 zwischen einer ersten Position 7 und einer zweiten Position 8 hin und her bewegt werden kann. In der in Fig. 1 gezeigten ersten Position 7 bewirkt die Umschaltklappe 6, dass Luft lediglich aus der Belüftungsbox 2 angesaugt werden kann. Diese Luft wird in der Folge dem Luftentfeuchter 5 zugeführt und wieder in die Belüftungsbox 2 eingeblasen. D.h. es liegt in diesem Fall ein geschlossener Luftkreislauf in der Vorrichtung zur Heutrocknung vor.

In der zweiten Position 8 hingegen, die in Fig. 1 durch die strichlierte Linie angedeutet ist, wird die Luft vorzugsweise vollständig von außen bzw. von außerhalb der Belüftungsbox 2 angesaugt. Konkret ist hierfür ein Luftkanal 9 unter dem Dach 3 ausgebildet. Durch das Entlangführen der von außen angesaugten Luft unter dem Dach 3 wird eine Wärmeübertragung zwischen dieser Luft und dem Dach 3 begünstigt. Wenn das Dach 3 aufgrund der Sonneneinstrahlung warm ist, kann auf diese Weise die von außen angesaugte Luft - letztlich durch Sonnenenergie - angewärmt werden. Die Umschaltklappe 6 ermöglicht es somit, von außen ansaugbare Luft gezielt einzusetzen, um zum Erreichen einer gewünschten Temperatur der Luft in der Belüftungsbox 2 bzw. in deren Anfangsbereich 15 und/oder Endbereich 16, d.h. zum Erreichen einer gewünschten Innentemperatur, beizutragen.

Die Innentemperatur sowie die relative Luftfeuchtigkeit kann mit Sensoren 17, die im Anfangsbereich 15 und Endbereich 16 angeordnet sind, gemessen werden. Zur Messung einer Außentemperatur der von außen angesaugten Luft ist ein Temperaturfühler 24 im Luftkanal 9 vor der Umschaltklappe 6 vorgesehen. Aber natürlich sind auch Ausführungsvarianten denkbar, in denen statt des Temperaturfühlers 24 ein Sensor 17 verwendet wird, um außerdem die relative Luftfeuchtigkeit der von außen angesaugten Luft direkt im Luftkanal 9 zu messen.

Das erfindungsgemäße Verfahren sieht nun vor, dass ein Gesamtleistungswert festgelegt wird, der der Summe aus einer mittleren Leistungsaufnahme des Ventilators 4 und des Luftentfeuchters 5 entspricht. Solange die Innentemperatur einen vorgegebenen Wert nicht übersteigt, wird die angesaugte Luftmenge auf einen Minimalwert reduziert. Dies geschieht, durch Reduktion der Drehzahl des Ventilators 4, indem die Leistung des Ventilators 4 auf einen Minimalleistungswert geregelt wird. Gleichzeitig wird die Leistung des Luftentfeuchters 5 auf einen Maximalleistungswert geregelt, wobei hierbei im Wesentlichen der Kompressor 13 mit maximaler Leistung betrieben wird. Die Summe aus dem Minimalleistungswert des Ventilators 4 und dem Maximalleistungswert des Luftentfeuchters 5 ist dabei kleiner gleich dem Gesamtleistungswert.

Indem der Luftentfeuchter 5 mit maximaler Leistung betrieben wird, wird auch die durch den Luftentfeuchter 5 gesaugte Luft nicht nur maximal entfeuchtet, sondern auch durch die Abwärme des Kompressors 13 und/oder des Kondensators 12 sehr stark angewärmt, sodass sich die Innentemperatur sukzessive erhöht.

Sobald die Innentemperatur den vorgegebenen Wert übersteigt, wird die Leistung des Luftentfeuchters 5 zurückgeregelt, auf einen Wert kleiner gleich dem Maximalleistungswert. Umgekehrt wird die Leistung des Ventilators 4 hochgeregelt, auf einen Wert größer als der Minimalleistungswert, um die angesaugte Luftmenge auf einen Sollwert zu erhöhen. Dabei bleibt jedoch die Summe aus den aktuellen Leistungen des Luftentfeuchters 5 und des Ventilators 4 stets kleiner gleich dem Gesamtleistungswert. Typischerweise beträgt der vorgegebene Wert für die Innentemperatur 20°C bis 28°C, vorzugsweise 20°C bis 25°C. Fällt die Innentemperatur wieder unter den vorgegebenen Wert, so wird die Leistung des Ventilators 4 wieder zurückgefahren, vorzugsweise auf den Minimalleistungswert, und die Leistung des Luftentfeuchters 5 wird wieder hochgefahren, vorzugsweise auf den Maximalleistungswert, und so fort.

Die angesaugte Luftmenge (in m³) pro Zeiteinheit (h) und pro Quadratmeter Boxenfläche (m_{B}²) wird durch einen Sensor 18 zur Messung der Geschwindigkeit der angesaugten Luft überwacht. Dieser Sensor 18 ist im gezeigten Ausführungsbeispiel im Luftentfeuchter 5, in Durchströmungsrichtung 20 gesehen hinter dem Verdampfer 11 angeordnet. Da der von der Luft durchströmbare Querschnitt des Luftentfeuchters 5 bekannt ist, ergibt sich daraus unmittelbar der Luftdurchsatz.

Bei der Trocknung von Heu 1 hat es sich als optimal erwiesen, wenn der Minimalwert der angesaugten Luftmenge zwischen 200 m³/h/m_{B}² und 300 m³/h/m_{B}², vorzugsweise bei 250 m³/h/m_{B}² liegt. D.h. diese Luftdurchsätze ergeben sich, wenn die Leistung des Ventilators 4 auf den Minimalleistungswert geregelt ist. Der Sollwert der angesaugten Luftmenge liegt hingegen zwischen 350 m³/h/m_{B}² und 600 m³/h/m_{B}², vorzugsweise bei 400 m³/h/m_{B}².

Wie erwähnt, kann außerdem mit der Umschaltklappe 6 gezielt Luft von außerhalb der Belüftungsbox 2 dazu benutzt werden, die Innentemperatur zu erhöhen, wenn die Außentemperatur hoch genug ist. Das Verfahren wird dann dahingehend erweitert, dass in Abhängigkeit von der Innentemperatur und/oder der Außentemperatur und/oder der Differenz zwischen der Innentemperatur und der Außentemperatur zwischen einem ersten Modus und einem zweiten Modus hin und her geschaltet wird. Dabei wird der erste Modus durch die Umschaltklappe 6 in der ersten Position 7 realisiert, d.h. die Luft wird lediglich aus der Belüftungsbox 2 angesaugt. Der zweite Modus wird durch die Umschaltklappe 6 in der zweiten Position 8 realisiert, d.h. die Luft wird von außerhalb der Belüftungsbox 2 angesaugt.

Das erfindungsgemäße Verfahren kann mittels einer Regel-Steuereinheit 14 automatisiert durchgeführt werden. Die Regel-Steuereinheit 14 verarbeitet hierzu Signale bzw. Daten der Sensoren 17, 18, 19 und des Temperaturfühlers 24 und überwacht die Leistungsaufnahme von Ventilator 4 und Luftentfeuchter 5. Die Ausführung der Regel-Steuereinheit 14 als speicherprogrammierbare Steuerung ermöglicht es zudem, die aktuelle Menge des zu trocknenden Heus 1 zu berücksichtigen sowie den vorgegebenen Wert für die Innentemperatur ggf. anzupassen. Basierend auf diesen Daten bzw. Angaben steuert die Regel-Steuereinheit 14 die Umschaltklappe 6 bzw. den Elektrozylinder 10 an und regelt die Leistung des Ventilators 4 sowie des Entlüfters 5 bzw. des Kompressors 13, ohne dass es zu einem Übersteigen des Gesamtleistungswerts kommt.

### BEZUGSZEICHENLISTE

- 1: Heu
- 2: Belüftungsbox
- 3: Dach
- 4: Ventilator
- 5: Luftentfeuchter
- 6: Umschaltklappe
- 7: Erste Position der Umschaltklappe
- 8: Zweite Position der Umschaltklappe
- 9: Luftkanal
- 10: Elektrischer Zylinder
- 11: Verdampfer
- 12: Kondensator
- 13: Kompressor
- 14: Regel-Steuereinheit
- 15: Anfangsbereich
- 16: Endbereich
- 17: Sensor zur Messung von Temperatur und Luftfeuchtigkeit
- 18: Sensor zur Messung der Geschwindigkeit der angesaugten Luft
- 19: Drucksensor
- 20: Durchströmungsrichtung
- 21: Luftkanal im Anfangsbereich
- 22: Boxenfläche
- 23: Boden
- 24: Temperaturfühler

## Patentansprüche

1. Verfahren zum Trocknen von Heu (1), wobei das Heu (1) in eine Belüftungsbox (2) mit einer anströmbaren Boxenfläche (22) aufgegeben wird, wobei mittels mindestens eines steuerbaren Ventilators (4) Luft angesaugt und zumindest teilweise einem steuerbaren Luftentfeuchter (5) zugeführt wird und wobei die zumindest teilweise entfeuchtete Luft mittels des mindestens einen Ventilators (4) in die Belüftungsbox (2) auf die anströmbare Boxenfläche (22) eingeblasen wird und wobei die Luft, nachdem sie durch einen Verdampfer (11) des Luftentfeuchters (5) geführt worden ist, angewärmt wird mittels eines Kondensators (12) des Luftentfeuchters (5) und/oder mittels eines Kompressors (13) des Luftentfeuchters (5), **dadurch gekennzeichnet, dass** das Verfahren zumindest in einer Anfangsphase die folgenden Schritte umfasst:
- Reduzierung der angesaugten Luftmenge auf einen Minimalwert durch Regelung der Leistung des mindestens einen Ventilators (4) auf einen Minimalleistungswert;
- Regelung der Leistung des Luftentfeuchters (5) auf einen Maximalleistungswert, wobei die Summe aus Minimalleistungswert und Maximalleistungswert kleiner gleich einem festgelegten Gesamtleistungswert ist;
- Regelung der Leistung des Luftentfeuchters (5) auf einen Wert kleiner als der Maximalleistungswert und Regelung der Leistung des mindestens einen Ventilators (4) auf einen Wert größer als der Minimalleistungswert, um die angesaugte Luftmenge auf einen Sollwert zu erhöhen, sobald eine Innentemperatur der in der Belüftungsbox (2) befindlichen Luft einen vorgegebenen Wert übersteigt,
wobei die Summe aus den Leistungen des Luftentfeuchters (5) und des mindestens einen Ventilators (4) kleiner gleich dem Gesamtleistungswert ist.

2. Verfahren nach Anspruch 1, **dadurch gekennzeichnet, dass** der Minimalwert der angesaugten Luftmenge zwischen 200 m³/h/m_{B}² und 300 m³/h/m_{B}², vorzugsweise bei 250 m³/h/m_{B}² liegt.

3. Verfahren nach einem der Ansprüche 1 bis 2, **dadurch gekennzeichnet, dass** der Sollwert der angesaugten Luftmenge zwischen 350 m³/h/m_{B}² und 600 m³/h/m_{B}², vorzugsweise bei 400 m³/h/m_{B}² liegt.

4. Verfahren nach einem der Ansprüche 1 bis 3, **dadurch gekennzeichnet, dass** der vorgegebene Wert für die Innentemperatur 20°C bis 28°C, vorzugsweise 20°C bis 25°C beträgt.

5. Verfahren nach einem der Ansprüche 1 bis 4, **dadurch gekennzeichnet, dass** in einem ersten Modus die Luft lediglich aus der Belüftungsbox (2) angesaugt wird, dass in einem zweiten Modus die Luft zumindest teilweise von außerhalb der Belüftungsbox (2) angesaugt wird und dass ein Hin- und Herschalten zwischen dem ersten Modus (7) und dem zweiten Modus (8) in Abhängigkeit von der Innentemperatur und/oder einer Außentemperatur der von außerhalb der Belüftungsbox (2) angesaugten Luft und/oder der Differenz zwischen der Innentemperatur und der Außentemperatur erfolgt.

## Claims

1. Method for drying hay (1), wherein the hay (1) is placed in a ventilation box (2) with a box surface (22) to which flow can take place, wherein air is sucked in by means of at least one controllable fan (4) and is supplied at least partially to a controllable air dehumidifier (5) and wherein the at least partially dehumidified air is blown into the ventilation box (2) onto the box surface (22) to which flow can take place by means of the at least one fan (4) and wherein, after the air has been guided through an evaporator (11) of the air dehumidifier (5), the air is heated by means of a condenser (12) of the air dehumidifier (5) and/or by means of a compressor (13) of the air dehumidifier (5), **characterized in that** the method comprises the following steps at least in an initial phase:
- reducing the sucked-in quantity of air to a minimum value by regulating the power of the at least one fan (4) to a minimum power value;
- regulating the power of the air dehumidifier (5) to a maximum power value, wherein the sum of the minimum power value and maximum power value is less than or equal to a specified total power value;
- regulating the power of the air dehumidifier (5) to a value less than the maximum power value and regulating the power of the at least one fan (4) to a value greater than the minimum power value in order to increase the sucked-in quantity of air to a desired value as soon as an inner temperature of the air located in the ventilation box (2) exceeds a predefined value,
wherein the sum of the powers of the air dehumidifier (5) and the at least one fan (4) is less than or equal to the total power value.

2. The method according to claim 1, **characterized in that** the minimum value of the sucked-in quantity of air is between 200 m³/h/m_{B}² and 300 m³/h/m_{B}², preferably at 250 m³/h/m_{B}².

3. The method according to one of claims 1 to 2, **characterized in that** the desired value of the sucked-in quantity of air is between 350 m³/h/m_{B}² and 600 m³/h/m_{B}², preferably at 400 m³/h/m_{B}².

4. The method according to one of claims 1 to 3, **characterized in that** the predefined value for the inner temperature is 20°C to 28°C, preferably 20°C to 25°C.

5. The method according to one of claims 1 to 4, **characterized in that** in a first mode the air is merely sucked in from the ventilation box (2), that in a second mode the air is at least partially sucked in from outside the ventilation box (2) and that switching takes place between the first mode (7) and the second mode (8) back and forth depending on the inner temperature and/or an outer temperature of the air sucked in from outside the ventilation box (2) and/or the difference between the inner temperature and the outer temperature.

## Revendications

1. Procédé pour le séchage de foin (1), dans lequel le foin (1) est déposé dans un caisson d'aération (2) dont une surface de caisson (22) peut être exposée à un flux, dans lequel au moins un ventilateur (4) contrôlable aspire de l'air et l'amène au moins en partie à un déshumidificateur d'air (5) contrôlable, et dans lequel l'air au moins en partie déshumidifié est injecté au moyen de l'au moins un ventilateur (4) dans le caisson d'aération (2) sur la surface de caisson (22) pouvant être exposée au flux et dans lequel l'air, après être passé à travers un évaporateur (11) du déshumidificateur d'air (5), est réchauffé au moyen d'un condenseur (12) du déshumidificateur d'air (5) et/ou au moyen d'un compresseur (13) du déshumidificateur d'air (5), **caractérisé en ce qu'**il comprend, au moins dans une phase initiale, les étapes suivantes :
- réduction de la quantité d'air aspirée à une valeur minimale par réglage de la puissance de l'au moins un ventilateur (4) à une valeur de puissance minimale,
- réglage de la puissance du déshumidificateur d'air (5) à une valeur de puissance maximale, la somme de la valeur de puissance minimale et de la valeur de puissance maximale étant inférieure ou égale à une valeur déterminée de puissance totale ;
- réglage de la puissance du déshumidificateur d'air (5) à une valeur inférieure à la valeur de puissance maximale et réglage de la puissance de l'au moins un ventilateur (4) à une valeur supérieure à la valeur de puissance minimale, afin d'augmenter la quantité d'air aspirée jusqu'à une valeur de consigne dès qu'une température intérieure de l'air qui se trouve dans le caisson d'aération (2) dépasse une valeur prédéterminée, la somme des puissances du déshumidificateur d'air (5) et de l'au moins un ventilateur (4) étant inférieure ou égale à la valeur de puissance totale.

2. Procédé selon la revendication 1, **caractérisé en ce que** la valeur minimale de la quantité d'air aspirée est comprise entre 200 m³/h/m_{B}² et 300 m³/h/m_{B}², de préférence près de 250 m³/h/m_{B}².

3. Procédé selon l'une des revendications 1 à 2, **caractérisé en ce que** la valeur de consigne de la quantité d'air aspirée est comprise entre 350 m³/h/m_{B}² et 600 m³/h/m_{B}², de préférence près de 400 m³/h/m_{B}².

4. Procédé selon l'une des revendications 1 à 3, **caractérisé en ce que** la valeur prédéterminée de température intérieure est comprise entre 20 °C et 28 °C, de préférence entre 20 °C et 25 °C.

5. Procédé selon l'une des revendications 1 à 4, **caractérisé en ce que** dans un premier mode, l'air est seulement aspiré du caisson d'aération (2), **en ce que** dans un deuxième mode, l'air est au moins en partie aspiré à l'extérieur du caisson d'aération (2) et une commutation en va-et-vient se produit entre le premier mode (7) et le deuxième mode (8) en fonction de la température intérieure et/ou d'une température extérieure de l'air aspiré à l'extérieur du caisson d'aération (2) et/ou de la différence entre la température intérieure et la température extérieure.
